# FASCICULE DE BREVET EUROPEEN

(11) **EP 0 634 605 B1**
(45) Date de publication et mention de la délivrance du brevet: **22.01.1997**
(21) Numéro de dépôt: 94109990.5
(22) Date de dépôt: 28.06.1994
(51) Int. Cl.: C08G 59/00, F21V 7/00, B29D 11/00

(54) **Réflecteur en matière plastique, plus particulièrement destiné à un dispositif d'éclairage ou de signalisation de véhicule**
Reflektor aus Kunststoff, insbesondere für Scheinwerfer oder Richtungsanzeiger von Fahrzeugen
Reflector in plastic material, more especially designed as a vehicle light or signalling device

(30) Priorité: 09.07.1993 FR 9308451
(43) Date de publication de la demande: 18.01.1995
(73) Titulaire: VALEO VISION, 93000 Bobigny (FR)
(72) Inventeur: Chitarra, Salvatore, F-92160 Antony (FR); Nowak, Eric, F-94130 Nogent sur Marne (FR); Ville-Renon, Frédéric, F-93450 l'Ile Saint-Denis (FR); Awe, Jens, D-64673 Zwingenberg (DE); Beer, Helmut, D-64385 Reichelsheim (DE)
(74) Mandataire: Lemaire, Marc

(56) Documents cités:
- EP-A- 0 184 554
- EP-A- 0 527 071
- Week 9151, Derwent Publications Ltd., London, GB; AN 91-373666 'lamp reflector' & JP-A-03 252 002 (TORAY) 11 Novembre 1991
- DATABASE WPI Week 8834, Derwent Publications Ltd., London, GB; AN 88-240195 & JP-A-63 175 059 (MITSUBISHI RAYON) 19 Juillet 1988

## Description

La présente invention a pour objet un réflecteur en matière plastique, plus particulièrement destiné à un dispositif d'éclairage ou de signalisation de véhicule.

Un tel dispositif d'éclairage ou de signalisation comprend essentiellement une lampe placée au centre ou foyer d'un réflecteur concave pour former un faisceau lumineux déterminé.

Le réflecteur doit présenter une surface réfléchissante de qualité particulièrement élevée afin d'assurer une répartition contrôlée de la lumière réfléchie et exempte de défauts et d'irrégularités qui seraient susceptibles d'engendrer des réflexions parasites génératrices d'éblouissement.

A la fois par souci d'économie et pour permettre l'obtention de formes de plus en plus compliquées, on a réalisé de tels réflecteurs en matière plastique.

Les matières thermoplastiques qui permettent un moulage aisé, facilement contrôlable, donnent en général satisfaction pour l'obtention d'un état de surface compatible avec la fonction optique requise.

Mais ces matières thermoplastiques présentent l'inconvénient d'être sensibles à l'échauffement provoqué par la lampe, lorsque le dispositif d'éclairage ou de signalisation est allumé.

Cet inconvénient se traduit par l'apparition de déformations locales affectant la qualité du faisceau lumineux réfléchi, de manière d'autant plus sensible que le volume du réflecteur est faible.

Les matières plastiques thermodurcissables résistent mieux à l'échauffement. Les compositions utilisées, par example décrites dans le document EP-A-0 527 071, comprennent essentiellement une résine à base de polyester insaturé, un agent compensateur de retrait, tel qu'un composé thermoplastique, des fibres de verre formant charges de renforcement.

L'expérience a permis de déterminer les proportions appropriées des différents constituants de manière à obtenir, au moulage par injection, un état de surface exempt d'aspérité ou de crevasse, dit de qualité optique, nécessaire pour les applications concernées.

A cet égard il convient de rappeler que la qualité optique requise pour ces applications est très supérieure à celle qui correspond à un simple brillant de surface.

Cependant, même en utilisant ces proportions appropriées, on a pu remarquer que le moulage de réflecteurs de petites dimensions ne permettait pas d'obtenir des résultats satisfaisants.

Divers problèmes apparaissent en effet. En premier lieu, sous l'effet de la chaleur dégagée par la lampe, se produit un phénomène de dégazage c'est-à-dire de vaporisation du solvant ou autres matières volatiles ou dégradables contenues dans la matière. Ceci a pour conséquence de produire un voile à la surface du réflecteur, sur la couche réfléchissante de ce dernier, qui entraîne une diminution importante du coefficient de réflexion.

En second lieu, les réflecteurs réalisés avec les matériaux thermodurcissables précités doivent être revêtus d'une couche de vernis destinée à parfaire l'état de surface et à favoriser l'adhésion de la couche d'aluminium qui assure la réflexion. Les vernis utilisés sont aussi sensibles à une forte élévation de température qui, par suite de leur décomposition entraîne aussi une dégradation de l'état de la couche d'aluminium.

La présente invention a pour objet un réflecteur en matière plastique destiné à un dispositif d'éclairage ou de signalisation de véhicule qui ne présente pas les inconvénients précités.

Un réflecteur selon l'invention est caractérisé en ce qu'il est réalisé par moulage, de préférence par injection d'un mélange à base d'une résine thermo-durcissable de type époxy reticulable, en présence d'un durcisseur.

Selon une caractéristique importante de l'invention, la résine époxy comprend des charges granuleuses formées de wollastonite ainsi que, avantageusement, d'un mélange de quartz et de kaolin.

Selon d'autres caractéristiques importantes de l'invention :
- la résine époxy comporte, en moyenne, plus d'un groupe époxy par molécule ;
- la wollastonite présente une granulométrie moyenne inférieure à 100 µm ;
- la granulométrie du mélange quartz/kaolin est inférieure à 100 µm ;
- la proportion de wollastonite est comprise entre 10 et 350 parties en poids rapportées à 100 parties en poids du total résine époxy et agent durcisseur ;
- la proportion du mélange quartz/kaolin est comprise entre 10 et 350 parties en poids rapportées à 100 parties en poids du total résine époxy et agent durcisseur ; et
- le total des charges constituées par la wollastonite et le mélange quartz/kaolin est inférieur à 360 parties en poids.

Eventuellement des charges additionnelles, telles que celles usuellement utilisées dans ce type d'application, peuvent être ajoutées.

Les résines époxy usuelles peuvent être utilisées, et à titre d'exemple les résines époxy suivantes :

I) Le polyglycidyl-ester ou le poly-(-β-méthylglycidyl)-ester, obtenus par réaction, en présence d'une base, entre un composé contenant au moins deux groupements carboxyl par molécule et l'épichlorhydrine, ou la β-méthyl-épichlorhydrine.

Comme composé contenant au moins deux groupements carboxyl par molécule, on peut utiliser les acides aliphatiques polycarbonés tels que, à titre d'exemples, l'acide oxalique, l'acide succinique, l'acide glutarique, l'acide adipique, l'acide pimélique, l'acide subérique, l'acide azélainique, ou les acides linoléiques di ou trimérisés.

On peut aussi utiliser des acides cyclo-aliphatiques polycarbonés, comme par exemple l'acide tétrahydrophtalique, 4-méthyltétrahydrophtalique, hexahydrophtalique, 4-méthylhexahydrophtalique.

On peut en outre utiliser aussi les acides phtalique, isophtalique ou téréphtalique.

II) Le polyglycidyl-éther ou le poly-(β-méthylglycidyl)-éther, obtenu par réaction entre un composé contenant au moins deux groupements libres hydroxyalcool et/ou hydroxyphénol et de l'épichlorhydrine ou de la β-méthylépichlorhydrine, en milieu alcalin, ou en présence d'un catalysateur acide suivi d'un traîtement alcalin.

Les glycidyl-éthers de ce type sont, par exemple des dérivés d'alcools acycliques comme l'éthylèneglycol, le diéthylèneglycol ou les poly (oxyéthylène) glycols supérieurs, propane-1,2-diol ou poly-(oxypropylène)-glycols, propane-1,3-diol,butane-1,4-diol, poly- (oxytétraméthylène) -glycols,pentane-1,5-diol, hexane-1,6-diol, hexane-2,4,6-triol,glycérine, 1,1,1-triméthylolpropane, pentaérythrite, sorbitol, ainsi que les polyépichlorhydrines.

On les obtient également à partir d'alcools aliphatiques cycliques, tels que le 1,4- cyclohexanediméthanol, di-(4-hydroxycyclohexyl)-méthane ou 2,2-di-(4-hydroxycyclohexyl)-propane, ou possédant des noyaux aromatiques comme la N,N-di-(2-hydroxyéthyl)-aniline ou le p,p'-di-(2-hydroxyéthylamino)-diphénylméthane.

Les glycidyl-éthers peuvent s'obtenir également à partir de phénols à un noyau, comme par exemple la résorcine ou l'hydroquinone, ou de phénols à plusieurs noyaux, comme par exemple le di-(4-hydroxyphényl)-méthane, 4,4'-dihydroxy-biphényl, di-(4-hydroxyphényl)-sulfone, 1,1,2,2-tétra-(-4-hydroxyphényl)-éthane, 2,2-di- (4-hydroxyphényl)-propane, 2,2-di-(3,5-dibrome-4-hydroxyphényl)-propane, ainsi qu'à partir de novolacs, obtenues par condensation d'aldéhydes, comme le formaldéhyde, l'acétaldéhyde, le chloraldéhyde ou le furfuraldéhyde, avec des phénols tels que le phénol ou avec des phénols qui ont été substitués sur le noyau, par des atomes de chlore ou des groupes alkyl C₁-C₉ tels que le 4-chlorphénol, 2-méthylphénol, ou 4-butylphénol tertiaire ou par la condensation avec des diphénols du type de ceux cités précédemment.

III) Composés poly-(N-glycidyl), obtenus par une déshydrochloration des produits de la réaction entre l'épichlorhydrine et des amines qui contiennent au moins deux groupements aminés, telles que, par exemple, l'aniline, le n-butylamine, di-(4-aminophényl)-méthane,m-xylylènediamine ou di-(4-méthylaminophényl)-méthane.

Parmi les composés poly-(N-glycidyl), on compte aussi le triglycidylisocyanurate, N,N'-diglycidyl dérivés du cycloalkylène-urée comme l'éthylène-urée ou la 1,3-propylène-urée, et des dérivés diglycidyls de l'hydantoin tels que le 5,5-diméthylhydantoin.

IV) Résines cycloaliphatiques, comme par exemple le di-(2,3-époxycyclopentyl)-éther, le di-(2,3-époxycyclopentylgly-cidyl)-éther, le 1,2-di-(2,3-époxycyclopentyloxy-éthane ou le 3,4-époxycyclohexylméthyl-3',4'-époxycyclohexanecarboxylate.

On peut aussi utiliser des résines époxy dans lesquelles des groupements 1,2-époxy sont liés à différents hétéro-atomes ou groupements fonctionnels.

Parmi ce type de composés, on peut citer, par exemple, les dérivés triglycidyl du 4-aminophénol, l'étherglycidylesterglycidyl de l'acide salicylique, le N-glycidyl-N'-(2-glycidyloxypropyl)-5,5-diméthylhydantoin ou le 2-glycidyloxy-1,3-di-(5,5-diméthyl-1-glycidylhydantoin-3-yl)-propane.

De préférence, la résine époxy utilisée est une résine époxy aromatique, c'est-à-dire un composé époxy qui présente un ou plusieurs cycles aromatiques par molécule.

En particulier, la résine époxy contient un diphénoldiglycidyléther ou une résine époxy-novolac et, de préférence, une résine époxyphénol- ou époxycrésol - novolac.

Les durcisseurs couramment employés avec les résines époxy ci-dessus conviennent, comme par exemple des acides polycarbonés et leurs anhydrides, des dicyandiamides, polyamines, polyaminoamides, des adducts contenant des groupes aminés, des polyols aliphatiques ou aromatiques ou des durcisseurs à action catalytique.

Comme acides polycarbonés, destinés à assurer le durcissement des résines époxy utilisées selon l'invention, conviennent par exemple les acides polycarbonés aliphatiques comme l'acide maléique, l'acide oxalique, l'acide succinique, les acides nonyl - ou dodécyl-succinique, l'acide glutarique, l'acide adipique, l'acide pimélique, l'acide subérique, l'acide azélainique, ou les acides linoléiques di ou trimérisés, les acides polycarbonés cycloaliphatiques comme, par exemple, les acides tétrahydrophtaliques, les acides méthylènedométhylène-tétrahydrophtaliques, les acides hexachlorènedométhylènetétrahydrophtaliques, les acides 4-méthyltétrahydrophtaliques, les acides hexahydrophtaliques ou les acides 4-méthylhexahydrophtaliques ou les acides polycarbonés aromatiques, comme par exemple les acides phtaliques, isophtaliques, téréphtaliques, trimellitiques, pyromellitiques ou les acides benzophénone-3,3',4,4'-tétracarboniques, de même que les anhydrides des acides polycarbonés précités.

Comme polyamine, on peut utiliser, pour le durcissement des mélanges de résines époxy décrits plus haut, des amines aliphatiques, cycloaliphatiques aromatiques ou hétérocycliques, comme par exemple l'éthylènediamine, la propane-1,2-diamine, la propane 1,3-diamine, la N,N-diéthyléthylènediamine, l'hexaméthylènediamine, la diéthylènetriamine, la triéthylène-tétramine, la tétraéthylènepentamine, le N-(2-hydroxyéthyl)-, N-(2-hydroxypropyl) et la N- (2-cyanoéthyl-diéthyltriamine, la 2,2,4-triméthylhexane-1,6-diamine, la 2,3,3-triméthylhexane-1,6-diamine, la N,N-diméthyldiamine et la N,N-diéthylpropane-1,3-diamine-éthanolamine, la m- et p-phénylènediamine, le di-(4-aminophényl)-méthane, la résine aniline-formaldéhyde, le di-(4-aminophényl)-sulfone, la m-xylylènediamine, le di-(4-aminocyclohexyl)-méthane, le 2,2-di-(4-aminocyclohexyl)-propane, le 2,2-di-(4-amino-3-méthylcyclohexyl)-propane, la 3-aminométhyl-3,5,5-triméthyl-cyclohexylamine (isophorondiamine) et la N-(2-aminoéthyl)-pipérazine.

Comme polyaminoamide, on utilise par exemple les produits issus de la réaction entre les acides polycarbonés, de préférence les acides gras di ou trimérisés, avec des polyamines, de préférence des polyamines aliphatiques qu'on met en excès. On obtient alors des produits qui sont décrits dans le livre "Handbook of Epoxy Resins" de H. LEE et K. NEVILLE, 1967, pages 10-2 à 10-10.

Les adducts comprenant des groupes aminés, produit d'une amine et d'un composé polyépoxyde, sont également connus en tant que durcisseurs de résines époxy et peuvent être ajoutées dans la formule de résine époxy décrite plus haut. Ils sont par exemple obtenus par la réaction entre les résines époxy et les polyamines, dans des proportions équivalentes. De tels adducts à groupements amines sont par exemple décrits dans les brevets américains 3,538,184, 4,330,659, 4,500,582 et 4,540,750.

Comme polyol aliphatique, on utilise par exemple l'éthylèneglycol, le diétylèneglycol, les poly-loxyéthylène)-glycols supérieurs, propane-1,2-diol ou poly (oxypropylène)-glycol, propane-1,3-diol, butane-1,4-diol, poly-(oxytétraméthylène)-glycol, pentane-1,5-diol, hexane-1,6-diol, hexane-2,4,6-triol, glycérine, 1,1,1-triméthylolpropane, pentaérythritol ou sorbitol.

Comme polyol aromatique, on utilise par exemple des phénols à un seul noyau, tels que la résorcine, l'hydroquinone, la N,N-di-(2-hydroxyéthyl)-aniline, ou des phénols à plusieurs noyaux tels que le p,p'-di-(2-hydroxyéthylamino)-diphénylméthane, le di-(4-hydroxyphényl)-méthane, le 4,4'-dihydroxybiphényl, le di-(4-hydroxyphényl)-sulfone, le 1,1,2,2-tétra-(4-hydroxyphényl)-éthane, le 2,2-di-(4-hydroxyphényl)-propane, le 2,2-di-(3,5 dibromedibrome-4-hydroxyphényl)-propane, tel que les novolacs, obtenu par la condensation d'aldéhyde, tels que le formaldéhyde, l'acétaldéhyde, le chloral ou furfuraldéhyde, avec des phénols, tels que le phénol ou avec des phénols dont le noyau est substitué par des atomes de chlore ou des groupes C₁-C₉, tels que le 4-chlorophénol, le 2-méthylphénol ou le 4-tertiobutylphénol ou par condensation avec des di-phénols de même famille que les produits précédents.

On peut également utiliser des produits de durcissement à effet catalytique, comme les amines tertiaires, par exemple le 2,4,6-tri-(diméthylaminoéthyl)-phénol et autres bases de mannich, la N-benzvldiméthylamine et la triéthanolamine ; les alkalimétallalkoxides des alcools, comme par exemple l'alcoolate de sodium du 2,4-dihydroxy-3-hydroxyméthylpentane ; les sels d'étain des acides alcaniques, comme par exemple l'octanoate d'étain ; les catalyseurs de Friedel et Craft, comme par exemple le trifluoride de Bore et ses complexes et chélates, obtenus par exemple par la réaction entre le trifluoride de Bore et une 1,3-dicétone.

De préférence, le durcisseur choisi est un durcisseur phénolique et, en particulier, un crésolnovolac.

Des accélérateurs de durcissement peuvent aussi être utilisés.

Par exemple, des amines tertiaires ou leurs sels, des composés d'ammonium quaternaire ou des oxydes métalliques alcalins conviennent avec l'utilisation de dicyandiamide, polyaminoamides, acides polycarbonés et leurs anhydrides.

Les quantités de durcisseurs dépendent de la nature chimique du durcisseur et des propriétés souhaitées pour le mélange durcissable ainsi que pour le réflecteur.

La quantité maximum peut facilement être déterminée.

Lorsque le durcisseur est une amine, la proportion normale est de 0,75 à 1,25 équivalent amine pour 1 équivalent époxy.

S'agissant d'acides polycarbonés ou de leurs anhydrides, la proportion usuelle est de 0,4 à 1,1 équivalent carboxyl ou anhydride pour 1 équivalent époxy.

En ce qui concerne les proportions de durcisseur de type polyphénol, elles sont de 0,75 à 1,25 de groupes hydroxyphénol pour 1 équivalent époxy.

Les durcisseurs à action catalytique sont utilisés dans une proportion pondérale de 1 à 40 parties pour 100 parties de résine époxy.

La wollastonite est un silicate de calcium naturel de formule Ca₃ [Si₃ O₉] ayant une structure en aiguilles avec une grosseur de particule de l'ordre du micron. La wollastonite synthétique qui présente une structure en aiguille convient également.

La wollastonite commercialisée par la société NYCO sous la marque "Nyad" est, par exemple, utilisable.

La granulométrie moyenne de la wollastonite utilisée est inférieure à 50 µm et de préférence inférieure à 5 µm.

Les quantités de wollastonite sont comprises entre 50 à 200 parties en poids rapportées à 100 parties en poids de l'ensemble résine époxy et durcisseur.

Le mélange quartz/kaolin est connu en soi et peut, par exemple, être obtenu par mélange de poudre de quartz et de kaolin.

La kaolinite qui représente la forme principale du kaolin se trouve dans le commerce sous la forme d'un silicate d'aluminium microcristallin.

De préférence, les quantités de mélange quartz/kaolin sont comprises entre 50 et 200 parties en poids rapportées à 100 parties en poids de l'ensemble résine époxy et durcisseur.

Le mélange quartz/kaolin est composé de 5 à 95 % en poids de quartz et de 95 à 5 % en poids de kaolinite, en particulier de 20 à 80 % de quartz et de 80 à 20 % de kaolinite.

La granulométrie moyenne du mélange quartz/kaolin est inférieure à 50 µm et de préférence inférieure à 5 µm.

Comme charges aditionnelles, peuvent être employées des charges de remplissage usuelles comme de la poudre de verre ou de la poudre métallique, des colorants, pigments, comme du dioxyde de titane, des agents facilitant le moulage comme des lubrifiants agents d'écoulement, des agents thixotropiques, stabilisateurs, de liaison entre charges et résines, accélérateurs de durcissement ou lubrifiants de moule.

Dans le cas où de telles charges additionnelles sont ajoutées au mélange, la wollastonite et le mélange quartz/kaolin représentent au moins deux tiers, et de préférence trois quarts, du total des charges.

Mais, de préférence, aucun renfort fibreux n'est utilisé. On entend ici par renfort fibreux des renforts d'une longueur de l'ordre de plusieurs millimètres tels que, par exemple, les fibres de verre.

La composition selon l'invention permet précisément d'obtenir des caractéristiques rhéologiques telles qu'un moulage par injection est non seulement possible, mais encore procure d'excellents résultats en particulier permet l'obtention d'un coefficient de réflexion élevé.

En outre on a pu constater que les réflecteurs ainsi réalisés ne présentent aucun phénomène de dégazage même lorsque la température dépasse 240°C à leur surface comme cela est le cas dans un projecteur, notamment anti-brouillard ou longue portée, de petites dimensions.

D'autres avantages par rapport aux réflecteurs réalisés à partir d'autres types de matières plastiques sont également apparus.

On a observé qu'en utilisant les mélanges ci-dessus, on obtient des réflecteurs moulés qui ne présentent pas de déformation sensible.

Par ailleurs on a pu noter que les réflecteurs selon l'invention présentent, par rapport aux réflecteurs de l'état de la technique, une meilleure résistance aux contraintes mécaniques notamment celles engendrées au niveau des dispositifs de fixation ou de montage du réflecteur (pattes, inserts, éléments d'encliquetage,...). En particulier les phénomènes de vrillage habituels de la surface du réflecteur, sous l'effet des contraintes précitées, sont inexistants.

D'autres caractéristiques et avantages de l'invention apparaîtront dans un exemple de réalisation de l'invention décrit ci-après en référence aux dessins annexés sur lesquels :
- la figure 1 représente, en coupe, un réflecteur de projecteur pour véhicule automobile, et
- la figure 2 est une vue arrière du réflecteur de la figure 1.

Un réflecteur 1 de projecteur pour véhicule automobile se présente sous la forme d'un corps creux 2 réalisé par moulage d'une matière plastique au moyen d'un procédé par injection.

Le sommet 3 du corps creux 2 présente un orifice 4 autour duquel est ménagé, côté convexe du corps creux 2, une zone d'appui plane 5 destinée à recevoir en appui un ensemble lampe/porte-lampe (non représenté) en définissant la position occupée par la source de lumière à l'intérieur du corps creux 2.

Le corps creux 2 présente, à l'opposé de son sommet 3, une ouverture 6 bordée par un rebord 7 comportant deux jupes 8 et 9 reliées entre elles par une série d'entretoises obliques 10.

Le rebord 7 présente ainsi une meilleure rigidité.

Des zones de montage 11 sont prévues sur la face arrière du corps creux, grâce auxquelles le réflecteur 1 peut être monté à articulation vis-à-vis d'une platine fixe ou dans un boîtier de projecteur.

Un tel réflecteur 1 est destiné à former, à partir des rayons lumineux émis par une lampe placée de manière appropriée à l'intérieur du corps creux 2, un faisceau lumineux particulier et défini de manière très précise.

On conçoit que la géométrie du réflecteur 1 doit être parfaitement définie et respectée lors des opérations de moulage et ne doit pas subir de variation sensible susceptible d'altérer, en service, la qualité du faisceau lumineux en service, en particulier sous l'effet de contraintes mécaniques aux zones de montage 11 ou sous l'effet de l'échauffement provoqué par la lampe.

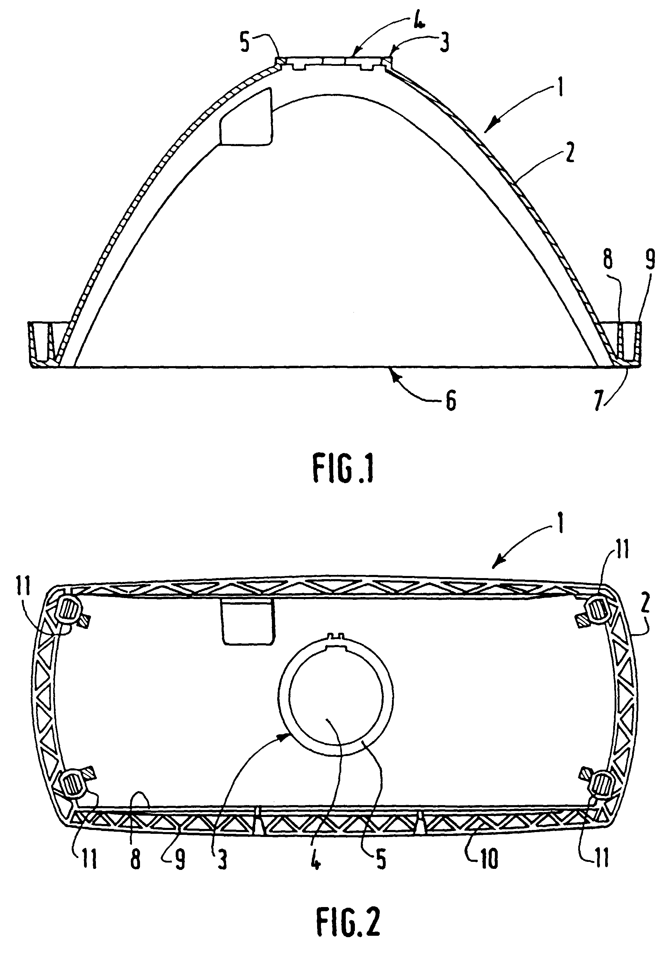

A cet égard on pourra noter, en particulier en se référant à la figure 2, que, d'une part, l'enveloppe de la lampe se trouve inévitablement à proximité de certaines parois du corps creux 2, ce qui soumet cette dernière à un échauffement important et qui, d'autre part, induit des différences importantes entre diverses zones du corps creux du fait de leur éloignement différent par rapport à la lampe entraînant l'apparition de contraintes mécaniques supplémentaires du fait de différences de dilatation qui entraînent, dans les réflecteurs en matière plastique de l'état de la technique, des phénomènes de vrillage du réflecteur altérant sa capacité à former un faisceau lumineux correct.

En outre, aucun phénomène de dégazage de la matière moulée ne doit se produire qui altèrerait la couche réflectrice du réflecteur.

Par ailleurs, pour obtenir des performances satisfaisantes requises par les normes en vigueur en ce qui concerne l'éclairage ou la signalisation automobile, l'état de surface du corps creux, sur la face interne concave de ce dernier, doit être parfait et atteindre un "fini optique" autrement plus exigeant que l'obtention d'un simple "brillant de surface".

Pour atteindre ces objectifs et satisfaire ces exigences, le réflecteur 1, selon l'invention, est obtenu par moulage, par injection d'une composition thermodurcissable à base de résine époxy réticulable en présence d'un durcisseur et, de préférence, comme indiqué précédemment, avec de la wollastonite et/ou un mélange quartz/kaolin.

A titre d'exemple, le moulage s'effectue par injection de la composition, à l'état pâteux, réalisée comme indiqué ci-après.

On procède au compoundage dans une machine "Buss-Cokneter PR 46" (désignation commerciale) à une température de 70° à 90°C du mélange suivant :
- 20,73 g d'une résine solide en poudre d'époxydecrésolnovolac avec un équivalent époxy de 4,0 à 4,4 par kg ;
- 10,07 g d'un phénolnovolac avec un équivalent hydroxyl de 8,0 à 9,0/kg, commercialisé par la société Occidental Chem., sous la marque commerciale "Durex 33009" ;
- 35,26 g de wollastonite présentant une granulométrie moyenne de 2,8 µm, commercialisée par la société Nyco, sous la marque "Nyad 1250" ;
- 30,22 g d'un mélange quartz/kaolin présentant une granulométrie moyenne de 1,8 µm, commercialisé par la société Hoffmann & Söhne, sous la marque "Aktisil EM" ;
- 0,4 g de 2-éthylimidazole ;
- 0,2 g de gamma-glycidyloxypropyl-triméthoxysilane, commercialisé par la société Union Carbide, sous la marque "Silan A-187" ;
- 0,4 g de noir de carbone "Elftex 460" ;
- 0,8 g de cire"OP",commercialisé par la société Hoechst" ;
- 0,5 g de stéarate de calcium.

On notera l'absence de charges fibreuses, lesquelles sont usuellement utilisées pour l'obtention d'une bonne tenue mécanique.

Le compound est ensuite transformé en granulés.

Bien entendu, les quantités indiquées ci-dessus sont à adapter en fonction de la quantité de matière à mouler nécessaire, tout en conservant les proportions relatives des différents constituants.

Les granulés ainsi formés sont introduits dans la trémie d'une presse à injection dont la buse d'injection débouche dans un moule à la forme du réflecteur décrit précédemment.

La résine, après passage dans un fourreau puis dans une buse régulée en température d'une presse, se trouve dans un état pâteux, mais n'est pas à ce moment totalement réticulée.

Cet état permet son injection dans un moule régulé en température où, par l'action du durcisseur et par l'effet de la température une réaction chimique de réticulation permet son durcissement. La pièce alors solide peut être extraite du moule.

Aucun prétraitement ni incorporation d'additifs n'est nécessaire.

A titre d'exemple, les paramètres d'injection peuvent être les suivants :
- Température du fourreau, dans l'ordre d'alimentation de la matière : 50°C à 80°C.
- Température de la buse d'injection : 80°C.
- Température de la masse moulée avant injection : 120°C.
- Température du moule : 180°C.
- Temps d'injection moyen (variable suivant le volume injecté) : 4 à 6 secondes.
- Temps de cuisson minimal : 45 secondes.
- Pression d'injection : 100 bars.
- Pression de maintien (% de la pression d'injection) : 80 à 100 %.

Ensuite, il est procédé à l'ouverture du moule et à l'éjection du réflecteur moulé.

Après refroidissement et ébavurage le réflecteur est placé dans une enceinte sous vide poussé dans laquelle est effectuée une métallisation par évaporation, afin de revêtir la face interne concave du réflecteur d'une mince couche d'aluminium.

Cette opération de métallisation peut être suivie d'une opération de dépôt d'une couche mince protectrice.

Les opérations de métallisation et de revêtement sont usuelles et ne seront pas décrites ici.

On notera que, selon un avantage de l'invention, le réflecteur moulé est directement métallisable sans qu'il soit nécessaire de procéder au dépôt préalable d'une couche d'une substance destinée à parfaire l'état de surface et/ou permettre l'adhésion de la couche d'aluminium réflectrice.

Après moulage du réflecteur, on constate que l'état de surface obtenu est particulièrement excellent.

On remarque également une parfaite homogénéité de composition et de répartition des charges dans le produit moulé, gage de la régularité de la répartition des contraintes mécaniques lorsque le réflecteur est soumis à des efforts.

La résistance mécanique est également excellente, meilleure que celle obtenue avec les compositions connues indiquées dans l'état de la technique, et cela malgré l'absence de charges fibreuses.

Des essais de tenue thermique ont été effectués en soumettant le réflecteur, monté dans un boîtier de projecteur, au fonctionnement continu d'une lampe placée à l'intérieur de celui-ci pendant une période d'une centaine d'heures, la température atteignant 240°C en certaines zones du réflecteur, en particulier au droit de la lampe.

Après ces essais, le réflecteur étant refroidi et démonté, l'examen de ce dernier montre l'absence d'altération de la couche d'aluminium, c'est-à-dire l'absence de dégazage.

Des contrôles dimensionnels confirment l'absence de déformation du réflecteur.

## Revendications

1. Réflecteur en matière plastique, plus particulièrement destiné à un dispositif d'éclairage ou de signalisation de véhicule, caractérisé en ce qu'il est réalisé par moulage, de préférence par injection d'un mélange à base d'une résine thermodurcissable de type époxy réticulable, en présence d'un durcisseur.

2. Réflecteur selon la revendication 1, caractérisé en ce que la résine époxy comporte en moyenne plus d'un groupe époxy par molécule.

3. Réflecteur selon la revendication 1 ou 2, caractérisé en ce que ladite résine époxy comprend des charges granuleuses formées de wollastonite.

4. Réflecteur selon la revendication 3, caractérisé en ce que ladite résine comprend des charges granuleuses formées d'un mélange de quartz et de kaolin.

5. Réflecteur selon la revendication 3 ou 4, caractérisé en ce que la wollastonite présente une granulométrie moyenne inférieure à 100 µm.

6. Réflecteur selon la revendication 5, caractérisé en ce que la wollastonite présente une granulométrie moyenne inférieure à 50 µm.

7. Réflecteur selon la revendication 6, caractérisé en ce que la wollastonite présente une granulométrie moyenne inférieure à 5 µm.

8. Réflecteur selon l'une des revendications 4 à 5, caractérisé en ce que la granulométrie du mélange quartz/kaolin est inférieure à 100 µm.

9. Réflecteur selon la revendication 8, caractérisé en ce que la granulométrie du mélange quartz/kaolin est inférieure à 50 µm.

10. Réflecteur selon la revendication 9, caractérisé en ce que la granulométrie du mélange quartz/kaolin est inférieure à 5 µm.

11. Réflecteur selon l'une quelconque des revendications 3 à 10, caractérisé en ce que la proportion de wollastonite est comprise entre 10 et 350 parties en poids rapportées à 100 parties en poids du total résine époxy et agent durcisseur.

12. Réflecteur selon l'une quelconque des revendications 4 à 11, caractérisé en ce que la proportion du mélange quartz/kaolin est comprise entre 10 et 350 parties en poids rapportées à 100 parties en poids du total résine époxy et agent durcisseur.

13. Réflecteur selon l'une quelconque des revendications 4 à 12, caractérisé en ce que le mélange quartz/kaolin est composé de 5 à 95 % en poids de quartz et de 95 à 5 % de kaolinite.

14. Réflecteur selon la revendication 13, caractérisé en ce que le mélange quartz/kaolin est composé de 20 à 80 % en poids de quartz et de 80 à 20 % de kaolinite.

15. Réflecteur selon d'une quelconque des revendications 4 à 14, caractérisé en ce que le total des charges constituées par la wollastonite et le mélange quartz/kaolin est inférieur à 360 parties en poids.

16. Réflecteur selon l'une quelconque des revendications précédentes, caractérisé en ce que la résine époxy ne comporte aucun renfort fibreux.

## Claims

1. Plastic reflector, particularly intended for a vehicle lighting or indicator device, characterised in that it is produced by moulding, preferably by injection, a mixture based on a thermosetting resin of the cross-linkable epoxy type, in the presence of a hardener.

2. Reflector according to Claim 1, characterised in that the epoxy resin has on average more than one epoxy group per molecule.

3. Reflector according to Claim 1 or 2, characterised in that the said epoxy resin comprises granular fillers consisting of wollastonite.

4. Reflector according to Claim 3, characterised in that the said resin comprises granular fillers consisting of a mixture of quartz and kaolin.

5. Reflector according to Claim 3 or 4, characterised in that the wollastonite has a mean particle size below 100 Tm.

6. Reflector according to Claim 5, characterised in that the wollastonite has a mean particle size below 50 Tm.

7. Reflector according to Claim 6, characterised in that the wollastonite has a mean particle size below 5 Tm.

8. Reflector according to one of Claims 4 to 5, characterised in that the particle size of the quartz/kaolin mixture is below 100 Tm.

9. Reflector according to Claim 8, characterised in that the particle size of the quartz/kaolin mixture is below 50 Tm.

10. Reflector according to Claim 9, characterised in that the particle size of the quartz/kaolin mixture is below 5 Tm.

11. Reflector according to any one of Claims 3 to 10, characterised in that the proportion of wollastonite is between 10 and 350 particles by weight in relation to 100 parts by weight of the total epoxy resin and hardener.

12. Reflector according to any one of Claims 4 to 11, characterised in that the portion of quartz/kaolin mixture is between 10 and 350 parts by weight in relation to 100 parts by weight of total epoxy resin and hardener.

13. Reflector according to any one of Claims 4 to 12, characterised in that the quartz/kaolin mixture is composed of 5 to 95% by weight quartz and 95 to 5% kaolinite.

14. Reflector according to Claim 13, characterised in that the quartz/kaolin mixture is composed of 20 to 80% by weight quartz and 80 to 20% kaolinite.

15. Reflector according to any one of Claims 4 to 14, characterised in that the total fillers consisting of the wollastonite and quartz/kaolin mixture is less than 360 parts by weight.

16. Reflector according to any one of the preceding claims, characterised in that the epoxy resin does not include any fibrous reinforcement.

## Patentansprüche

1. Reflektor aus Kunststoff, insbesondere für eine Beleuchtungs- oder Signalvorrichtung von Fahrzeugen, **dadurch gekennzeichnet**, daß er durch Formung, insbesondere durch Spritzgießen einer Mischung auf der Basis eines Duroplasts des Typs vernetzbares Epoxidharz in Gegenwart eines Härters hergestellt wird.

2. Reflektor nach Anspruch 1 , **dadurch gekennzeichnet**, daß das Epoxidharz im Durchschnitt mehr als eine Epoxid-Gruppe pro Molekül enthält.

3. Reflektor nach Anspruch 1 oder 2 , **dadurch gekennzeichnet**, daß das besagte Epoxidharz granulöse Füllstoffe in Form von Wollastonit enthält.

4. Reflektor nach Anspruch 3 , **dadurch gekennzeichnet**, daß das besagte Harz granulöse Füllstoffe in Form einer Mischung von Quarz und Kaolin enthält.

5. Reflektor nach Anspruch 3 oder 4 , **dadurch gekennzeichnet**, daß der Wollastonit eine durchschnittliche Korngröße unter 100 µm aufweist.

6. Reflektor nach Anspruch 5 , **dadurch gekennzeichnet**, daß der Wollastönit eine durchschnittliche Korngröße unter 50 µm aufweist.

7. Reflektor nach Anspruch 6 , **dadurch gekennzeichnet**, daß der Wollastonit eine durchschnittliche Korngröße unter 5 µm aufweist.

8. Reflektor nach einem der Ansprüche 4 bis 5 , **dadurch gekennzeichnet**, daß die Korngröße der Quarz-Kaolin-Mischung unter 100 µm liegt.

9. Reflektor nach Anspruch 8 , **dadurch gekennzeichnet**, daß die Korngröße der Quarz-Kaolin-Mischung unter 50 µm liegt.

10. Reflektor nach Anspruch 9 , **dadurch gekennzeichnet**, daß die Korngröße der Quarz-Kaolin-Mischung unter 5 µm liegt.

11. Reflektor nach einem der Ansprüche 3 bis 10, d a**dadurch gekennzeichnet**, daß der Wollastonit-Anteil zwischen 10 und 350 Gewichtsteilen, bezogen auf 100 Gewichtsteile der Gesamtmenge aus Epoxidharz und Härter, liegt.

12. Reflektor nach einem der Ansprüche 4 bis 11, d a**dadurch gekennzeichnet**, daß der Anteil der Quarz-Kaolin-Mischung zwischen 10 und 350 Gewichtsteilen, bezogen auf 100 Gewichtsteile der Gesamtmenge aus Epoxidharz und Härter, liegt.

13. Reflektor nach einem der Ansprüche 4 bis 12, **dadurch gekennzeichnet**, daß die Quarz-Kaolin-Mischung zu 5 bis 95 Gewichtsprozent aus Quarz und zu 95 bis 5 Gewichtsprozent aus Kaolinit besteht.

14. Reflektor nach Anspruch 13 , **dadurch gekennzeichnet**, daß der Quaez-Kaolin-Mischung zu 20 bis 80 Gewichtsprozent aus Quarz und zu 80 bis 20 Gewichtsprozent aus Kaolinit besteht.

15. Reflektor nach einem der Ansprüche 1 bis 14, d a**dadurch gekennzeichnet**, daß die Gesamtmenge der durch den Wollastonit und die Quarz-Kaolin-Mischung gebildeten Füllstoffe unter 360 Gewichtsteilen liegt.

16. Reflektor nach einem der vorangehenden Ansprüche, **dadurch gekennzeichnet**, daß das Epoxidharz keine Faserverstärkung enthält.
